# EUROPEAN PATENT APPLICATION

(11) **EP 2 220 980 A1**
(43) Date of publication of application: **25.08.2010**
(21) Application number: 09002493.6
(22) Date of filing: 21.02.2009
(51) Int. Cl.: A47J 43/044, A47J 43/07

(54) **Domestic appliance**

(71) Applicant: Braun GmbH, 61476 Kronberg (DE)
(72) Inventor: Petretty, Michael, 61440 Oberursel (DE); Riemer, Jörn, 61449 Steinbach (DE)

(57) **Abstract**

The present invention relates to a domestic appliance, preferably a blender, more preferably a hand blender (2). The domestic appliance comprises an electrical motor (44) for driving a processing tool (46) in a work area (24) of the domestic appliance and at least one integrated electric driven low voltage unit, preferably an illumination device (68) for illuminating the work area (24). According to the invention there is further provided a generator (82) for generating a low voltage being driven by the electrical motor (44), said generator (82) supplying the low voltage unit.

## Description

### FIELD OF THE INVENTION

The present invention relates to a domestic appliance, preferably a blender, more preferably a hand blender for mixing or comminuting foodstuffs, said domestic appliance comprising an electrical motor for driving a processing tool in a work area of the domestic appliance and at least one integrated electric driven low voltage unit.

### BACKGROUND OF THE INVENTION

A plurality of domestic appliances, like blenders, razors, toothbrushes for example, having an electrical motor in order drive a processing tool in the work area of the domestic appliance is already known from the state of the art.

Especially, domestic blenders, mixers or mixing devices for mixing or comminuting foodstuffs are well known. The known blenders may be categorized into two broad classifications. The first category includes blenders of the stand type. They are usually used for mixing a large amount of material and have usually been used for kneading bread doughs and mixing other heavy foodstuffs. The second category includes blenders of the handheld type, the so-called hand blenders. The lightweight and portable hand blenders are usually used for mixing small amounts of material.

A blender of the stand type is for example disclosed in US 4,277,181. The known food mixer has a stand with a base, a mixer head for mixing foodstuffs being pivotally mounted on the stand. Inside the mixer head there is provided an electrical motor for providing motive power to the whippers of the food mixer. The whippers of the known food mixer, which may also be referred to as the processing tools of the food mixer, are fixed to the mixer head and extend downward into the work area of the known food mixer. The food mixer further comprises an illumination device for illuminating the work area. The illumination device is integrated in the mixer head and comprises an incandescent lamp as a light source, said incandescent lamp being screwed into a socket inside the mixer head to be energized by an electric current. The socket is directly connected to the power cord of the blender so that the incandescent lamp remains lit regardless of whether the switch of the blender is turned on or off as long as the blender is plugged in and receives AC power. The incandescent lamp is placed in a recess of the mixer head, said recess having an outlet opening which is directed to the work area. Thus, the light generated by the incandescent lamp may leave the recess via the outlet opening in order to illuminate the work area. Further, a frosted lens is mounted within the outlet opening, said frosted lens diffusing the light from the incandescent lamp to provide uniform lightning to the work area.

The known blender uses an incandescent lamp for illuminating the work area, said incandescent lamp being directly connected to the power cord of the blender so that the incandescent lamp is supplied with the line-voltage. Due to the fact, that the incandescent lamp is supplied with the line-voltage, there remains a high risk of an electric shock for the user, e. g. if the comminuted or mixed foodstuffs are hurled up and damage the lamp or get in contact with the circuit of the lamp. In order to reduce this risk, there could be provided a low voltage light source instead. Even other units of the blender, e. g. a display or a sound module, could be designed as low voltage units, in order to avoid dangerous electric shocks. In order to reduce the line-voltage to a low voltage for the low voltage units there has to be provided a voltage transformer. However, the known voltage transformers are high priced and their components are oversized and heavy so that the dimensions and the weight of the blender is increased. If the blender is of the handheld type, the increased weight and dimensions cause a difficult handling of the hand blender.

It is therefore an object of the present invention to provide a domestic appliance, preferably a blender, more preferably a hand blender, which assures a save handling without the risk of electric shocks for the user on the one hand and which has a little weight and small dimensions on the other hand.

### SUMMARY OF THE INVENTION

The above-mentioned problem is solved by a domestic appliance as described in claim 1. Preferred and advantageous embodiments of the invention are described in the sub-claims.

The present invention is directed to a domestic appliance. The domestic appliance may for example be a razor or an electrical toothbrush. However, it is preferred if the domestic appliance is a blender for mixing or comminuting foodstuffs. The domestic appliance further comprises a processing tool. The processing tool may for example be a brush of the toothbrush or a blade of the razor. The processing tool may also be a mixing tool or a cutter blade of a blender. The processing tool is placed in the work area of the domestic appliance, e. g. the work area of a blender is an area, in which the mixing or comminuting of the foodstuffs takes place. Thus, the work area may be the interior of a container in which the foodstuffs to be mixed or comminuted and the processing tools of the blender are placed. In order to drive the processing tool, the domestic appliance further comprises an electrical motor. The electrical motor may for example be line-operated. The domestic appliance further comprises at least one integrated electric driven low voltage unit. This low voltage unit may for example be a display, a sound module or an illumination device. In this connection, the low voltage unit could also be referred to as a unit being supplied with a lower voltage than the supply voltage of the electrical motor. According to the invention there is further provided a generator for generating a low voltage. The generator is driven by the electrical motor, i. e. the movement generated by the electrical motor serves to drive the generator. Thus, the electrical motor drives the processing tool on the one hand and the generator on the other hand. The low voltage generated by the generator is then supplied to the low voltage unit.

By providing at least one low voltage unit, the risk of a dangerous electric shock could be minimized. Further, by using a generator being driven by the electrical motor of the domestic appliance instead of a common voltage transformer, the domestic appliance according to the invention has a little weight and small dimensions. This could be traced back to the fact, that the components of a generator, usually a rotor and a stator, are smaller and lighter than the components of common voltage transformers. Thus, the handling of the domestic appliance is improved.

In a preferred embodiment of the domestic appliance according to the invention, the domestic appliance is a blender of the handheld type, i. e. the domestic appliance is designed as a hand blender, preferably as a rod-shaped or rod-like hand blender. While the weight and the dimensions of stand type blenders are of relatively small importance, the weight and dimensions of a hand blender are the strongest influencing factors concerning the handling of the hand blender, especially since a hand blender has to be held in hand during the whole comminuting or mixing procedure. Above this, the hand of the user is permanently in contact with the hand blender during the comminuting or mixing procedure, so that it is much more save to provide low voltage units in order to reduce the risk of dangerous electric shocks.

In a further preferred embodiment of the domestic appliance according to the invention the low voltage unit is an illumination device. The illumination device may for example serve to illuminate parts of the domestic appliance. However, it is preferred that the illumination device serves to illuminate the above-mentioned work area of the domestic appliance, thereby facilitating the observation of the work progress. In order to illuminate the work area, the light signals generated by the illumination device should be conveniently targeted at the work area.

In another preferred embodiment of the domestic appliance according to the invention the illumination device comprises a light source. Such a light source could be an incandescent lamp for example. However, in order to have a small light source with a low consumption and an adequate intensity, said light source is preferably a light-emitting diode or a series of light-emitting diodes. By using a series of light-emitting diodes, every single light-emitting diode may be placed at another position, thereby assuring the illumination of the whole work area.

As already mentioned above, the electrical motor is supplied with a higher voltage than the low voltage unit. In an advantageous embodiment of the domestic appliance according to the invention the electrical motor is designed to be line-operated. For this purpose there may for example be provided a corresponding power cord at the domestic appliance which could be plugged into a power outlet via a corresponding plug at the end of the power cord. The line voltage preferably corresponds to 230V. In a second alternative of this embodiment the electrical motor is designed to be operated off the line or battery-supplied. In the latter case, the battery is preferably rechargeable. Both alternatives may also complement each other.

In a further advantageous embodiment of the domestic appliance according to the invention the domestic appliance comprises a housing. The term housing describes the whole housing of the domestic appliance which may consist of multiple housing parts. The housing comprises a motor housing portion in which the electrical motor is accommodated and a lower housing portion. The lower housing portion is arranged below the motor housing, i. e. the lower housing faces the work area. It is further preferred, if the lower housing portion at least partially extends into the work area. The lower housing portion may for example have a tubular shape for accommodating a working shaft or another transmission which is coupled to the electrical motor at the one end and which carries the processing tool in the work area at the other end. In this embodiment, the generator and/or the low voltage unit is arranged inside the lower housing portion. Due to the fact, that the generator is driven by the electrical motor so that the generator is not connected to the electric system of the electrical motor, it is possible to position the generator and/or the low voltage unit inside the lower housing portion near the work area. In contrast to common voltage transformers, which have to be connected directly to the electric circuit of the electrical motor, there is no risk of dangerous electric shocks. Thus, the accommodation space inside the lower housing, which in hand blenders is usually only used to accommodate an output shaft of the electrical motor, a coupling device and a working shaft, could be well used for the generator and/or the low voltage unit without a substantial change of the dimensions of the domestic appliance. Above this, the generator could be easily coupled with the output end or output shaft of the electrical motor or a working shaft without being in need of an extensive transmission. Finally, it should be noted, that short lines of connection could be achieved between the generator and the low voltage unit if the generator and the low voltage unit are both arranged inside the lower housing portion, i. e. the lines of connection do not have to extend throughout other portions of the housing like the motor housing for example.

In a further preferred embodiment of the domestic appliance according to the invention the lower housing portion comprises an upper section accommodating the generator and/or low voltage unit and a lower section. In a first alternative of this embodiment the upper section and the generator and/or low voltage unit are detachably mounted on the motor housing portion. Thus, the whole lower housing portion containing the generator and/or the low voltage unit and the working shaft with the processing tool could be demounted as a module and replaced by another module. In a second alternative of this embodiment the lower section is detachably mounted on the upper section. Thus, the lower section containing the transmission or the working shaft with the processing tool could be demounted as a module and replaced by another module, while the upper section with the generator and/or the low voltage unit remains attached to the motor housing. In both alternatives, which may also complement each other, a high flexibility of the domestic appliance is achieved.

In a further preferred embodiment of the domestic appliance according to the invention the housing further comprises an upper housing portion accommodating a control unit of the domestic appliance, the motor housing portion being arranged between the upper housing portion and the lower housing portion. Thus, a great distance between the work area and the control unit of the domestic appliance is achieved. In this embodiment it is further preferred if the electrical connectors for connecting the electrical motor to the power source are provided on the upper side of the electrical motor facing the accommodation space in the upper housing portion. Thus, the electric circuit of the electrical motor is placed far away from the work area, so that a high level of safety is assured.

In order to further reduce the risk of electric shocks for the user, the electrical motor separates the accommodation space in the upper housing portion from the accommodation space in the lower housing portion in a further advantageous embodiment of the domestic appliance according to the invention. In this embodiment the electrical motor is preferably sealing up the accommodation space in the upper housing portion with respect to the accommodation space in the lower housing portion, so that fluids which may have entered the lower housing are precluded from entering the upper housing portion. In the latter case, there may for example be provided an additional gasket between the electrical motor and a wall of the housing.

In order to facilitate the handling of the domestic appliance the motor housing portion and the upper housing portion form a handle of the domestic appliance in a further preferred embodiment of the domestic appliance according to the invention. In a further preferred variant of this embodiment, the lower housing portion essentially has smaller radial dimensions and/or a smaller diameter than the handle, so that the observation of the work area is facilitated. However, if the domestic appliance is a hand blender, at the distal end of the lower housing portion there may be provided a bell-shaped casing having greater radial dimensions than the handle, so that the processing tool could be enclosed safely.

In some domestic appliances the user may want to or have to vary the speed of the processing tool. Thus, in a further preferred embodiment of the blender according to the invention the rotation or oscillation frequency of the electrical motor may be altered. For this purpose, there may for example be provided a corresponding manual actuator at the domestic appliance. However, since altering of the rotation or oscillation frequency of the electrical motor leads to voltage alteration of the voltage supplied to the low voltage unit, said low voltage unit further comprises an automatic voltage regulator, so that a nearly constant low voltage is supplied to the low voltage unit. If the low voltage unit is an illumination device, the light intensity of the light signals generated by the illumination device remains constant.

According to another advantageous embodiment of the invention the generator comprises a stator and a rotor, the rotor being directly coupled with an output shaft of the electrical motor or a working shaft. As already mentioned before, by coupling the rotor directly with an output shaft of the electrical motor or a working shaft there is no need for an extensive transmission, so that the available space is effectively used. In both cases it is further preferred if the stator is mounted on the lower housing portion.

Basically, the illumination device mentioned above may permanently illuminate the work area, the domestic appliance and/or the environment of the domestic appliance. However, in a further preferred embodiment of the domestic appliance according to the invention the illumination device is designed to emit pulsed light signals in a stroboscopic manner. For example, the illumination device and its light source, respectively, is turned on and off in a flashlight-like manner. It is nevertheless also possible to block and deblock a permanent light of the illumination device in order to emit pulsed light signals in a stroboscopic manner. If the work area is illuminated by pulsed light signals, the user does not have to see every single phase of the procedure, e. g. the mixing or comminuting procedure. Instead, the user only perceives single pictures of the work area whenever a light signal is emitted to illuminate the work area. Thus, in a blender the continuous motion or transformation of the foodstuffs or/and the processing tool is represented by a series of short or instantaneous samples. This way, it is easier and more comfortable for the user to observe the comminuting or mixing procedure performed by the blender.

In order to make the observation of the work area more comfortable the pulsation frequency of the light signals may be altered in a further preferred embodiment of the domestic appliance according to the invention. It is further preferred that the pulsation frequency of the light signals could be automatically or/and manually altered. In the first case, the pulsation frequency may for example be coupled with the rotation or oscillation frequency of the electrical motor and the processing tool, respectively, so that a change of the rotation or oscillation frequency is considered, as will be described below. In the second case, the user may manually alter the pulsation frequency in order to change the pulsation frequency according to his needs. It is most preferred if the pulsation frequency may be automatically and manually altered in order to facilitate the handling of the domestic appliance on the one hand and to increase the flexibility of the domestic appliance on the other hand.

In a further preferred embodiment of the domestic appliance according to the invention the pulsation frequency of the light signals is coupled with the rotation or oscillation frequency of the processing tool, i. e. if the rotation or oscillation frequency of the processing tool is increased, the pulsation frequency is increased as well. If the rotation or oscillation frequency of the processing tool is decreased, the pulsation frequency is decreased as well. Since in most cases the rotation or oscillation frequency of the processing tool will correspond to the rotation or oscillation frequency of the output end/shaft of the electrical motor and/or a working shaft coupled therewith, the pulsation frequency may also be coupled with the rotation or oscillation frequency of one of the above mentioned components. Due to the fact, that the rotation or oscillation frequency of the processing tool could already be measured by the generator which is driven by the electrical motor, there is no need for an extensive measurement unit, thereby reducing the necessary space and number of components.

In a further preferred embodiment of the domestic appliance according to the invention which is based on the before described embodiment the pulsation frequency is coupled with the rotation or oscillation frequency according to the formula Fₚ = Fᵣ / x, wherein Fₚ is the pulsation frequency, Fᵣ is the rotation or oscillation frequency of the processing tool on the electrical motor and x is a number. In order to facilitate the observation of the work area x is preferably greater than 1, i. e. x>1, so that the pulsation frequency is lower than the rotation or oscillation frequency.

In a further advantageous embodiment of the domestic appliance according to the invention the number x in the above-mentioned formula is an integral number. In other words, the rotation or oscillation frequency is an integral multiple of the pulsation frequency. In this embodiment, the perceived single pictures of the work area, when a light signal is emitted to illuminate the work area, all show the work area when the processing tool is in the same position. If the processing tool is for example not covered, in this embodiment a fixed image of the rotating or oscillating processing tool will be perceived. Thus, the successive pictures form an easy traceable animation of the work area, thereby facilitating the observation of the work area.

It has been found out that an observation of the work area could be further facilitated, if a very low pulsation frequency is used. Thus, in a further preferred embodiment of the domestic appliance according to the invention the number x in the above-mentioned formula is equal to or greater than 10 or 20, i. e. the rotation or oscillation frequency is equal to or greater than ten times or twenty times the pulsation frequency.

In another preferred embodiment of the domestic appliance according to the invention the pulsation frequency or number x in the above-mentioned formula may be manually altered in a region between +/- 20%.

### BRIEF DESCRIPTION OF THE DRAWINGS

Preferred embodiments of the present invention will now be described, by way of example only, with reference to the drawings in which:
- Fig. 1: shows a schematic cross-sectional side-view of a first preferred embodiment of the domestic appliance according to the invention and
- Fig. 2: shows a schematic cross-sectional side-view of a second preferred embodiment of the domestic appliance according to the invention.

### DETAILED DESCRIPTION OF THE DRAWINGS

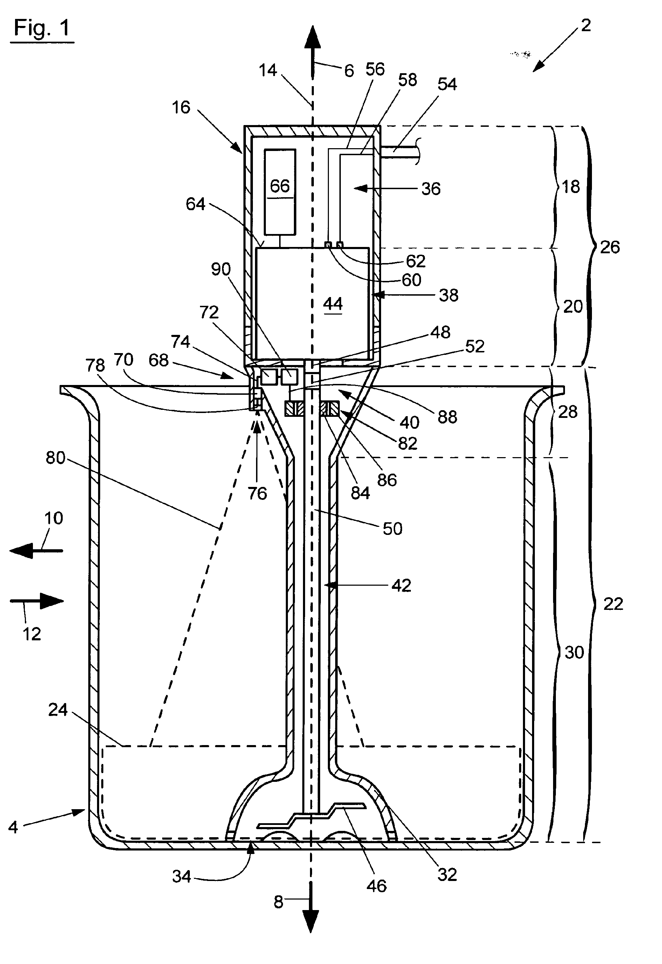

Fig. 1 shows a first embodiment of the domestic appliance according to the invention. The domestic appliance is a hand blender 2 for mixing or comminuting foodstuffs (not shown). The foodstuffs are placed in a container 4, which is no component of the hand blender 2. In Fig. 1, the opposing longitudinal directions 6, 8 and the opposing radial directions 10, 12 of the hand blender 2 are indicated by corresponding arrows.

The hand blender 2 is rod-shaped so that the hand blender 2 is insertable in elongated containers 4 having small radial dimensions. The hand blender 2 stretches along a longitudinal axis 14, said longitudinal axis 14 running in the longitudinal directions 6, 8. The hand blender 2 comprises a housing 16 for accommodating the further components of the hand blender 2.

The housing 16 is divided into an upper housing portion 18, a motor housing portion 20 following in the longitudinal direction 8 and a lower housing portion 22 following in the longitudinal direction 8, said lower housing portion 22 facing and at least partially extending into the work area 24 of the hand blender 2. The work area 24 is indicated by a dashed line in Fig. 1. The motor housing portion 20 is arranged between the upper housing portion 18 and the lower housing portion 22 relating to the radial directions 6, 8. While the lower housing portion 22 at least partially extends into the work area 24 of the hand blender 2, the upper housing portion 18 and the motor housing portion 20 are placed at a distance from the work area 20, i. e. the upper housing portion 18 and the motor housing portion 20 are placed upwards in the longitudinal direction 6.

The upper housing portion 18 and the motor housing portion 20 form the handle 26 of the hand blender 2 which could be easily grasped by the user. In order to facilitate the handling of the hand blender 2, the lower housing portion 22 essentially has smaller dimensions in the radial direction 10 than the upper housing portion 18 and the motor housing portion 20 of the handle 26, i. e. in the shown embodiment the diameter of the lower housing portion 22 is essentially smaller than the diameter of the handle 26.

The lower housing portion 22 may further be subdivided into an upper section 28 facing the motor housing portion 20 and a following lower section 30. The upper section 28 is funnel-shaped and narrows in the longitudinal direction 8. In the shown embodiment, the upper section is detachably mounted on the motor housing portion 20 and the handle 26, respectively, so that the whole lower housing portion 22 could be released from the handle 26 and replaced with another component. The tubular lower section 30 follows in the longitudinal direction 8. At the distal end of the lower section 30 facing away from the handle 26, the lower section 30 is widened again, so that the distal end forms a bell-shaped casing 32 having an opening 34 being directed into the longitudinal direction 8. Thus, foodstuffs may enter the bell-shaped casing 32 in order to reach the processing tool, which will be described later.

The upper housing portion 18 encloses a first accommodation space 36, while the motor housing portion 20 encloses a second accommodation space 38, the first and second accommodation spaces 36, 38 being interconnected. Further, the upper section 28 of the lower housing portion 22 encloses a third accommodation space 40, while the lower section 30 of the lower housing portion 22 encloses a fourth accommodation space 42.

In the second accommodation space 38 inside the motor housing portion 20 there is arranged an electrical motor 44 for driving the processing tool 46 already mentioned above. The processing tool 46 may be a mixing tool or cutter blade, the latter being shown in Fig. 1. The electrical motor 44 is placed in the second accommodation space 38, so that is separates the first accommodation space 36 in the upper housing portion 18 from the third accommodation space 40 in the upper section 28 of the lower housing portion 22. In this case, the electrical motor 44 seals up the first accommodation space 36 in the upper housing portion 36 and the second accommodation space 38 in the motor housing portion 20 with respect to the accommodation space 40 in the upper section 28 of the lower housing portion 22, thereby preventing fluids or particles of the foodstuffs inside the lower housing portion 22 from entering the motor housing portion 20 and the upper housing portion 18. For this purpose, there may for example be placed a gasket (not shown) between the electrical motor 44 and a wall of the housing 16.

The electrical motor 44 comprises an output shaft 48, said output shaft 48 protruding downwards in the longitudinal direction 8 along the longitudinal axis 14. Thus, the longitudinal axis 14 may also be referred to as the rotation axis of the hand blender 2. The output shaft 48 extends into the third accommodation space 40 inside the upper section 28 of the lower housing portion 22 and the distal end of the output shaft 48 is coupled with a working shaft 50 via an unlockable coupling 52 so that a rotation of the output shaft 48 about the longitudinal axis 14 is transmitted to the working shaft 50 via coupling 52. Since the coupling 52 is unlockable, the working shaft 50 may be detached from the hand blender 2 together with the lower housing portion 22.

The working shaft 50 also extends downwards in the longitudinal direction 8 along the longitudinal axis 14 and is received inside the third and fourth accommodation space 40, 42 of the lower housing portion 22. At the lower or distal end of the working shaft 50 there is attached the processing tool 46 by a torque proof connection. Thus, the rotation of the output shaft 48 of the electrical motor 44 may be transmitted to the processing tool 46 via the coupling 52 and the working shaft 50. The processing tool 46 is placed in the bell-shaped casing 32 of the lower housing portion 22, said bell-shaped casing 32 being positioned in the work area 24 of the hand blender 2, so that the processing tool 46 serves to mix or comminute the foodstuffs in the work area 20 inside the container 4. Due to the fact, that the distal end of the lower housing portion 22 is formed by the bell-shaped casing 32, a collision between the rotatable processing tool 46 and the lower housing portion 22 is avoided and the processing tool 46 is securely accommodated inside the bell-shaped casing 32, even if the processing tool 46 protrudes in the radial directions 10, 12. Above this, foodstuffs in the work area 24 may enter the interior of the bell-shaped casing 32 through opening 34 in order to be mixed or comminuted by the rotating processing tool 46.

The electrical motor 44 is line-operated, the line voltage being 230V. For this purpose, there is provided a power cord 54 leading from the outside of the housing 16 into the upper housing portion 18. The extensions of the power cord 54 running through the first accommodation space 36 of the upper housing portion 18 are indicated by lines 56, 58 through which the electrical motor 44 is supplied with power. In order to connect the lines 56, 58 to the electrical motor 44, the electrical motor 44 comprises electrical connectors 60, 62 being coupled with the lines 56, 58. The electrical connectors 60, 62 are provided on the upper side 64 of the electrical motor 44 facing the first accommodation space 36 inside the upper housing portion 18. Alternatively, the electrical motor 44 may be designed to be operated off the line or battery-supplied. In the latter case, the battery is preferably rechargeable. If a battery is used, it should be positioned in the first accommodation space 36 inside the upper housing portion 18 of the hand blender 2. Both alternatives may also complement each other.

In the first accommodation space 36 inside the upper housing portion 16 there is further arranged a control unit 66 for controlling the electrical motor 44. The rotation frequency of the electrical motor 44 which normally corresponds to the rotation frequency of the processing tool 46 may be manually altered by the control unit 66. For this purpose, there may for example be provided a corresponding manual actuator at the hand blender 2 and the handle 26, respectively, which is connected to the control unit 66.

The hand blender 2 further comprises at least one electric driven low voltage unit, e. g. a display or a sound module, being integrated in the hand blender 2. In the shown embodiment, the low voltage unit is an illumination device 68 for illuminating the work area 24 of the hand blender 2. The illumination device 68 is arranged in the third accommodation space 40 inside the upper section 28 of the lower housing portion 22. The components of the illumination device 68 will be described hereinafter.

The illumination device 68 comprises a light source 70, the light source 70 being formed by a light-emitting diode. However, the light source 70 may also be formed by a series of light-emitting diodes, i. e. by at least two light-emitting diodes. The light source 70 is controlled by a control unit 72 of the illumination device 68, sending control signals via line 74 to the light source 70. In the wall of the upper section 28 of the lower housing portion 22 there is further provided an outlet opening 76 for the light signals generated inside the upper section 28 by the light source 70. A translucent cover 78 is mounted inside the outlet opening 76 to preclude upwardly hurled foodstuffs from entering the third accommodation space 40 inside the upper section 28 of the lower housing portion 22. The translucent cover 78 may for example be a frosted lens. The outlet opening 78 is directed in the longitudinal direction 8 so that the emitted light signals 80 are directed to the work area 24 of the hand blender 2.

According to the invention, there is further provided a generator 82 for generating a low voltage, said generator 82 supplying the illumination device 68. The generator 82 is driven by the electrical motor 44, i. e. in contrast to the electrical motor 44 the illumination device is not line-operated or battery-supplied and the circuit of the electrical motor 44 is galvanically isolated from the circuit of the illumination device 68. The generator 82 is arranged in the third accommodation space 40 inside the upper section 28 of the lower housing portion 22 as well. The generator 82 is composed of a rotor 84 and a stator 86. While the rotor 84 of the generator is directly coupled with the working shaft 50, so that a rotation of the working shaft 50 causes a rotation of the rotor 84 at the same speed, the stator 86 is statically mounted on the upper section 28 of the lower housing portion 22. By rotating the rotor 84 relative to the stator 86 a low voltage is generated by the generator 82, said low voltage being supplied to the illumination device 68 via line 88.

As already stated above, the rotation frequency of the electrical motor 44 and the working shaft 50, respectively, is manually alterable by the control unit 66 according to the needs of the user. However, an altering of the rotation frequency of the electrical motor 44 leads to voltage alteration of the voltage generated by the generator 82. In order to overcome this problem, the illumination device 68 and the generator 82, respectively, further comprises a voltage regulator 90, so that a nearly constant low voltage is supplied to the illumination device 68. Thus, the light intensity of the light signals 80 generated by the light source 70 of the illumination device 68 remains constant.

In the shown embodiment the illumination device 68 is designed to emit pulsed light signals 80 in a stroboscopic manner, i. e. the light source 70 is turned on and off in a flashlight-like manner. Due to the fact, that the work area 24 is illuminated by pulsed light signals 80, the user does not see every phase of the mixing or comminuting procedure. Instead, the user only perceives single pictures of the work area 24 whenever a light signal 80 is emitted. Thus, the continuous motion or transformation of the foodstuffs or/and the processing tool 46 is represented by a series of short or instantaneous samples. This way, it is easier and more comfortable for the user to observe the comminuting or mixing procedure. In the shown embodiment, the pulsation frequency Fₚ of the light signals 80 may be automatically and manually altered.

In order to automatically alter the pulsation frequency Fₚ of the light signals 80 the pulsation frequency Fₚ is coupled with the rotation frequency Fᵣ of the processing tool 46. The rotation frequency Fᵣ of the processing tool 46 may be detected by the generator 82 who already detects the rotation frequency of the working shaft 50, the rotation frequency of the working shaft 50 corresponding to the rotation frequency of the processing tool 46. Simultaneously, the control unit 72 calculates the pulsation frequency Fₚ according to the formula Fₚ = Fᵣ / x, wherein x is a number equal to or more preferably greater than 1. Most preferably x is an integral number.

Afterwards, the control unit 72 sends a corresponding control signal to the light source 70, so that the light source 70 emits pulsed light signals with the calculated pulsation frequency Fₚ. Thus, if the rotation frequency Fᵣ is increased or decreased the pulsation frequency will be increased or decreased as well. It has been found out, that an observation of the comminuting or mixing procedure could be further facilitated, if a very low pulsation frequency Fₚ is used. Thus, in the shown embodiment the number x of the above-mentioned formula is equal to or greater than 10 or 20.

In order to manually alter the pulsation frequency Fₚ there may be provided a manual actuator (not shown) at the housing 16, preferably at the lower housing portion 22 of the housing 16. Such a manual actuator could be linked with the control unit 72 of the illumination device 68, so that the pulsation frequency Fₚ or x of the above formula may be altered. In the shown embodiment the pulsation frequency Fₚ or x of the above formula may be manually altered in a region between +/- 20%, so that the pulsation frequency Fₚ could be altered according to the needs of the user to a sufficient extent without impeding the observation of the mixing or comminuting procedure.

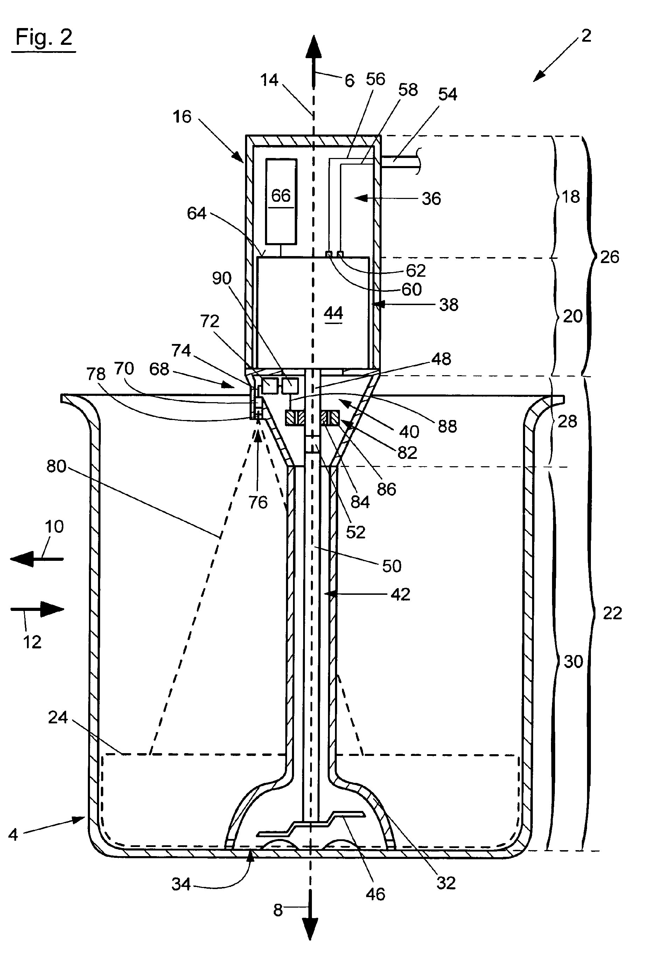

Fig. 2 shows a second embodiment of the hand blender 2 for mixing or comminuting foodstuffs according to the invention. Since the second embodiment mainly corresponds to the first embodiment according to Fig. 1, in the following only the differences will be described, the same reference signs will be used for similar or the same components and the above description of the first embodiment applies accordingly in this regard.

In the first embodiment according to Fig. 1 the illumination device 68 and the generator 82 may be released from the handle 26 together with the whole lower housing portion 22, the working shaft 50 and the processing tool 46 as a continuous module by detaching the upper section 28 of the lower housing portion 22 and unlocking the working shaft 50 at the coupling 52. Afterwards this module may be replaced with another module.

In contrast to this, in the second embodiment the lower section 30 of the lower housing portion 22 is detachably mounted on the upper section 28 of the lower housing portion 22. Thus, the lower section 30, the working shaft 50 and the processing tool 46 may be released from the hand blender 2 as a continuous module by detaching the lower section 30 of the lower housing portion 22 and unlocking the working shaft 50 at the coupling 52. After having released said module, the upper section 28 of the lower housing portion 22, the illumination device 68 and the generator 82 remain at the hand blender 2, so that the mentioned components could also be used for another module, substituting the released module. In order to make this procedure possible, in the second embodiment the rotor 84 of the generator 82 is not directly coupled with the working shaft 50. Instead, the rotor 84 is directly coupled with the output shaft 48 of the electrical motor 44.

## Claims

1. Domestic appliance, preferably a blender, more preferably a hand blender (2), said domestic appliance comprising an electrical motor (44) for driving a processing tool (46) in a work area (24) of the domestic appliance and at least one integrated electric driven low voltage unit, **characterised in that** there is provided a generator (82) for generating a low voltage being driven by the electrical motor (44), said generator (82) supplying the low voltage unit.

2. Domestic appliance according to claim 1, **characterised in that** the low voltage unit is an illumination device (68), preferably an illumination device (68) for illuminating the work area (24).

3. Domestic appliance according to claim 2, **characterised in that** the illumination device (68) comprises a light source (70), said light source (70) preferably being a light-emitting diode or a series of light-emitting diodes.

4. Domestic appliance according to one of the preceding claims, **characterised in that** the electrical motor (44) is designed to be line-operated, the line voltage preferably being 230V, or **in that** the electrical motor (44) is designed to be operated off the line or battery-supplied, said battery preferably being rechargeable.

5. Domestic appliance according to one of the preceding claims, **characterised in that** the domestic appliance comprises a housing (16), said housing (16) comprising a motor housing portion (20) for accommodating the electrical motor (44) and a lower housing portion (22) facing the work area (24), the lower housing portion (22) preferably at least partially extending into the work area (24), the generator (82) and/or the low voltage unit being arranged inside the lower housing portion (22).

6. Domestic appliance according to claim 5, **characterised in that** the lower housing portion (22) comprises an upper section (28) accommodating the generator (82) and/or the low voltage unit and a lower section (30), the upper section (28) and the generator (82) and/or the low voltage unit are detachably mounted on the motor housing portion (20) and/or the lower section (30) being detachably mounted on the upper section (28).

7. Domestic appliance according to one of claims 5 to 6, **characterised in that** the housing (16) further comprises an upper housing portion (18) accommodating a control unit (66) of the domestic appliance, the motor housing portion (20) being arranged between the upper housing portion (18) and the lower housing portion (22) and electrical connectors (60, 62) for connecting the electrical motor (44) to the power source preferably being provided on the upper side (64) of the electrical motor (44) facing the accommodation space (36) in the upper housing portion (18).

8. Domestic appliance according to claim 7, **characterised in that** the electrical motor (44) separates the accommodation space (36) in the upper housing portion (18) from the accommodation space (40, 42) in the lower housing portion (22), the electrical motor (44) preferably sealing up the accommodation space (36) in the upper housing portion (18) with respect to the accommodation space (40, 42) in the lower housing portion (22).

9. Domestic appliance according to one of claims 7 to 8, **characterised in that** the motor housing portion (20) and the upper housing portion (18) form a handle (26) of the domestic appliance, the lower housing portion (22) preferably essentially having smaller radial dimensions and/or a smaller diameter than the handle (26).

10. Domestic appliance according to one of the preceding claims, **characterised in that** the rotation or oscillation frequency (Fᵣ) of the electrical motor (44) is alterable, said low voltage unit comprising an automatic voltage regulator (90).

11. Domestic appliance according to one of the preceding claims, **characterised in that** the generator (82) comprises a stator (86) and a rotor (84), the rotor (84) being directly coupled with an output shaft (48) of the electrical motor (44) or a working shaft (50), the stator (86) preferably being mounted on the lower housing portion (22).

12. Domestic appliance according to one of claims 2 to 11, **characterised in that** the illumination device (68) is designed to emit pulsed light signals (80) in a stroboscopic manner.

13. Domestic appliance according to claim 12, **characterised in that** the pulsation frequency (Fₚ) of the light signals (80) is alterable, said pulsation frequency (Fₚ) of the light signals (80) preferably being automatically or/and manually alterable, said pulsation frequency (Fₚ) of the light signals (80) more preferably being coupled with the rotation or oscillation frequency (Fᵣ) of the processing tool (46).

14. Domestic appliance according to claim 13, **characterised in that** the pulsation frequency (Fₚ) is coupled with the rotation or oscillation frequency (Fᵣ) according to the formula ${F}_{p} = {F}_{r} / x ,$
wherein Fₚ is the pulsation frequency, Fᵣ is the rotation or oscillation frequency of the processing tool (46) and x is a number, preferably an integral number, x more preferably being equal to or greater than 1, 10 or 20.

15. Domestic appliance according to one of claims 12 to 14, **characterised in that** the pulsation frequency (Fₚ) or x is manually alterable in a region between +/- 20%.
